# EUROPÄISCHE PATENTANMELDUNG

(11) **EP 2 042 012 A1**
(43) Veröffentlichungstag der Anmeldung: **01.04.2009**
(21) Anmeldenummer: 08159225.5
(22) Anmeldetag: 27.06.2008
(51) Int. Cl.: A01B 59/06

(54) **Anbauvorrichtung für ein Arbeitsfahrzeug**

(30) Priorität: 28.09.2007 DE 102007046889
(71) Anmelder: CLAAS Selbstfahrende Erntemaschinen GmbH, 33428 Harsewinkel (DE)
(72) Erfinder: Fedotov, Dr. Sergej, 01069 Dresden (DE); Bernhardt, Prof. Dr. Gerd, 01728 Bannewitz/OT Hänichen (DE)

(57) **Zusammenfassung**

Die Erfindung betrifft eine Anbauvorrichtung (3) für ein Arbeitsfahrzeug (1) zur Koppelung eines Arbeitsgerätes (31) an das Arbeitsfahrzeug (1) eine in der Tragrahmenstruktur (8) des Arbeitsfahrzeugs (1) gelagerte Hubwelleneinheit (33) und eine mit dieser in Wirkverbindung stehenden Koppelstruktur (20) umfassend, wobei die Koppelstruktur (20) eine Vielzahl von Koppelgliedern (22, 24, 26) umfasst und die Koppelglieder (22, 24, 26) der Koppelstruktur (20) und die Hubwelleneinheit (33) zwei geschlossene kinematische Ketten (50, 54) und zumindest eine teilweise geschlossene kinematische Kette (46) ausbilden. Auf diese Weise wird auch bei asymmetrischer Lasteinleitung eine ausgeglichenen Belastung der Hubzylinder (18), der die Anbauvorrichtung (3) bildenden Koppelglieder (22, 24, 26, 33) und das Bewegen des Anbaugerätes (31) in einer Vielzahl von Freiheitsgraden gewährleistet.

## Beschreibung

Die Erfindung betrifft eine Anbauvorrichtung für ein Arbeitsfahrzeug nach dem Oberbegriff des Anspruchs 1.

Aus der WO 2004/056168 ist eine Anbauvorrichtung für als Schlepper ausgeführte Arbeitsfahrzeuge bekannt geworden, deren Koppelstruktur obenseitig über eine sogenannte obenliegende Hubwelle an der Tragrahmenstruktur des Schleppers abgestützt wird. Die Hubwelle ist über einteilig oder mehrteilig ausgeführte Hubarmanordnungen mit zwei an der Tragrahmenstruktur des Schleppers gelenkig angeordneten Hubzylindern gekoppelt. Frontseitig nimmt die Hubarmanordnung zwei oder paarweise angeordnete in vertikaler Richtung positionierte längenveränderliche Koppelglieder, hier hydraulisch verstellbare Hubzylinder, auf, die an ihren untenseitigen, freien Enden gelenkig mit paarweise angeordneten Unterlenkern verbunden sind. Die Unterlenker sind jeweils gelenkig an der Tragrahmenstruktur des Schleppers in einem unterhalb der Fahrzeugachse liegenden Bereich angeschlagen. Durch Druckbeaufschlagung oder Druckentlastung der mit der Hubwelle verbundenen Hubzylinder kann der Koppelrahmen und das damit verbundene Anbaugerät in vertikaler Richtung ausgehoben oder abgesenkt werden. Zugleich kann durch Druckbeaufschlagung oder Druckentlastung der nahezu vertikal angeordneten Hubzylinder eine spezielle Lage des Koppelrahmens und damit des Anbaugerätes justiert werden. Aufgrund dessen, dass die vertikal verlaufenden Hubzylinder jeweils in einem mittleren Bereich an den Unterlenkern angreifen, tritt insbesondere bei asymmetrischer Lasteinleitung in die Anbauvorrichtung Biegung in den Unterlenkern, eine Verdrehung der Hubwelle und Druckbelastungen auf die den freien Enden der Unterlenker zugeordneten Arretierungen auf. Zugleich ist wegen der überwiegen längenunveränderlich ausgeführten Koppelglieder, die Anzahl der Freiheitsgrade in der sich die Koppelstruktur bewegen kann erheblich eingeschränkt.

Zur Optimierung der auf die Anbauvorrichtung einwirkenden Belastungen sowie unter dem Gesichtspunkt eines hochflexiblen, eine Vielzahl von Freiheitsgraden aufweisenden Einsatzes einer derartigen Anbauvorrichtung ist unter anderem aus der EP 1 360 886 ein hubwellenloses Konzept einer Anbauvorrichtung bekannt geworden. Die Koppelglieder der Anbauvorrichtung sind dabei in geschlossenen kinematischen Ketten nach Art eines Hexapodens angeordnet. Je nach gewünschten Freiheitsgraden umfasst eine solche, aus sechs Koppelgliedern bestehende Anbauvorrichtung bis zu sechs längenveränderliche oder teilweise starre Koppelglieder über die ein Anbaugerät an einem Arbeitsfahrzeug, beispielsweise einem Schlepper, abgestützt und geführt wird. Aufgrund dessen, dass die Koppelglieder jeweils unmittelbar an dem Schlepper und einem Koppelrahmen oder unmittelbar an dem Arbeitsgerät angeordnet sind, treten in den Koppelgliedern nur Zug- und Druckbelastungen auf. Die rechts- und linksseitigen Koppelglieder der Anbauvorrichtung sind jedoch hydraulisch miteinander gekoppelt, sodass bei asymmetrischer Lasteinleitung in die Anbauvorrichtung, wie dies etwa bei Arbeiten mit einem Pflug oder beim Mähen mit Seitenmähwerken auftritt, eine asymmetrische Belastung der Koppelglieder auftritt. Zur Vermeidung von Schäden an den in der Regel als Hubzylinder ausgeführten Koppelgliedern müssen diese deshalb erheblich überdimensioniert werden. Zudem verlangt die ausschließliche Koppelung des Anbaugerätes mit dem Traktor über die Koppelglieder eine aufwendige Ansteuerung der Koppelglieder, damit das jeweilige Anbaugerät die gewünschte Bewegung präzise ausführt.

Es ist deshalb Aufgabe der Erfindung die beschriebenen Nachteile des Standes der Technik zu vermeiden und insbesondere eine Anbauvorrichtung vorzuschlagen, die auch bei asymmetrischer Lasteinleitung eine ausgeglichene Belastung der die Anbauvorrichtung bildenden Koppelglieder gewährleistet.

Diese Aufgabe wird erfindungsgemäß durch die kennzeichnenden Merkmale des Anspruchs 1 gelöst.

indem die Anbauvorrichtung für ein Arbeitsfahrzeug zur Koppelung eines Arbeitsgerätes an das Arbeitsfahrzeug eine in der Tragrahmenstruktur des Arbeitsfahrzeugs gelagerte Hubwelleneinheit und eine mit dieser in Wirkverbindung stehende Koppelstruktur umfasst, und die Koppelstruktur eine Vielzahl von Koppelgliedern aufweist und die Koppelglieder der Koppelstruktur und die Hubwelleneinheit geschlossene kinematische Ketten und zumindest eine teilweise geschlossene kinematische Kette ausbilden, wird sichergestellt, dass die Koppel- und Verbindungselemente mechanisch über die Hubwelle gekoppelt sind, sodass auch bei asymmetrischer Lasteinleitung in die Anbauvorrichtung eine nahezu ausgeglichene Lastverteilung innerhalb der Koppelstruktur erreicht wird, sodass eine Überdimensionierung der Koppelelemente zur Absicherung asymmetrischer Lasteinleitungen entbehrlich wird.

Eine konstruktiv besonders einfache technische Umsetzung einer derartige kinematische Ketten bildenden Anbauvorrichtung wird in einer vorteilhaften Ausgestaltung der Erfindung dann erreicht, wenn die Koppelstruktur erste gelenkig an der Tragrahmenstruktur angeordnete obere Koppelelemente, zweite gelenkig an der Tragrahmenstruktur angelenkte untere Koppelelemente und gelenkig an Hubarmen der Hubwelle angeordnete Verbindungselemente umfasst und wobei die dem Arbeitsfahrzeug abgewandten freien Enden der Koppel- und Verbindungselemente unmittelbar an dem jeweiligen Arbeitsgerät oder an einem Koppelrahmen angreifen. Zudem können die Kosten einer solchen Ausführung auch dadurch optimiert werden, dass eine relative große Anzahl von Gleichteilen eingesetzt wird.

In einer weiteren vorteilhaften Ausgestaltung der Erfindung umfasst die Hubwelleneinheit zumindest eine in der Tragrahmenstruktur des Arbeitsfahrzeugs gelagerte Hubwelle, zumindest einen mit der Hubwelle fest verbundenen Hubarm und einen mit dem Hubarm gelenkig verbundenen, in der Tragrahmenstruktur des Arbeitsfahrzeugs gelagerten Hubzylinder. Damit wird sichergestellt, dass die Koppelstruktur unabhängig von ihrer konkreten Ausgestaltung stets eine Translationsbewegung in vertikaler Richtung ausführen kann. Außerdem können auf diese Weise die Elemente der Anbauvorrichtung zumindest teilweise in den Bereich des Arbeitsfahrzeugs integriert werden, sodass sich schließlich eine geringere Ausladelänge der Koppelstruktur an dem Arbeitsfahrzeug ergibt. In analoger Weise werden diese Effekte erzielt, wenn in einer weiteren erfindungsgemäßen Ausgestaltung der Erfindung der Hubwelle der Hubwelleneinheit zumindest zwei Hubarme zugeordnet sind und jeder Hubarm schwenkbeweglich mit einem gelenkig in der Tragrahmenstruktur des Arbeitsfahrzeugs gelagerten Hubzylinder gekoppelt ist.

In einer vorteilhaften Weiterbildung der Erfindung werden eine erste geschlossenen kinematischen Kette von den mit einem Koppelrahmen oder dem Arbeitsgerät verbundenen oberen Koppelelementen und die zweite geschlossenen kinematische Kette von den ebenfalls mit dem Koppelrahmen und/oder dem Arbeitsgerät verbundenen unteren Koppelelemente gebildet werden. Dies hat insbesondere den Vorteil, dass wesentliche Elemente der Koppelstruktur leicht zugänglich und damit einfach an dem Arbeitsfahrzeug montierbar und demontierbar sind, wobei vorzugsweise an sich bereits vorhandene Koppelstellen für die Adaptierung genutzt werden können. Zudem ermöglicht eine derartige Struktur der geschlossenen kinematischen Ketten, dass das Arbeitsgerät in nahezu unveränderter horizontaler Lage in vertikaler Richtung bewegt werden kann. Dieselben Effekte ergeben sich, wenn die erste und zweite geschlossene kinematische Kette jeweils von den mit einem Koppelrahmen und/oder dem Arbeitsgerät verbundenen oberen und unteren Koppelelementen einer Seite oder der jeweils gegenüberliegenden Seiten der Koppelstruktur gebildet werden.

In einer weiteren vorteilhaften Ausgestaltung der Erfindung wird die zumindest eine teilweise geschlossene kinematische Kette von der Hubwelleneinheit und den mit der Hubwelleneinheit und einem Koppelrahmen und/oder dem Arbeitsgerät gelenkig gekoppelten Verbindungselementen gebildet. Eine solche Ausgestaltung hat insbesondere den Vorteil, dass die Koppelstruktur und damit das Arbeitsgerät sehr flexibel in unterschiedlichsten Freiheitsgraden bewegt werden kann und auch in dem Fall, dass die Koppelstruktur ausschließlich starre Koppelglieder umfasst, immer noch eine Translationsbewegung in vertikaler Richtung und gegebenenfalls eine leichte Drehung um die Querachse ausführbar ist.

Eine große Flexibilität bezüglich Anschaffungskosten, realisierbarer Freiheitsgrade und Nutzung der Anbauvorrichtung für verschiedenste Einsatzfälle ergibt sich dann, wenn wahlweise eines oder mehrere der Koppel- und Verbindungselemente starr und die übrigen Koppelglieder und Verbindungselemente längenveränderlich ausgebildet sind.

In einer weiteren vorteilhaften Ausgestaltung der Erfindung wird eine konstruktive Überbestimmung von Freiheitsgraden dadurch vermieden, dass stets zumindest eines der Verbindungselemente starr ausgebildet ist.

Eine optimierte Lasteinleitung in die Koppelstruktur sowie letztlich in die Anbauvorrichtung wird in einer vorteilhaften Ausgestaltung der Erfindung dadurch möglich, dass die Koppel- und Verbindungselemente paarweise angeordnet und jeweils rechtseitig oder linksseitig der Anbauvorrichtung zugeordnet sind.

In einer vorteilhaften Weiterbildung der Erfindung kann die Längenänderung der längenveränderlichen Koppel- und Verbindungselemente hydraulisch, mechanisch und/oder elektrisch bewirkt werden.

Niedrige Reaktionskräfte in der Hubwellenlagerung werden auch dadurch sichergestellt, dass die Lagerung der Hubwelle an der Tragrahmenstruktur des Arbeitsfahrzeugs und die Lagerung der unteren Koppelelemente an der Tragrahmenstruktur des Arbeitsfahrzeugs nahe zueinander erfolgt.

Die universelle Einsetzbarkeit der Anbauvorrichtung wird auch dadurch noch gesteigert, dass die arbeitsgeräteseitigen Enden der oberen und unteren Koppelelemente und der Verbindungselemente als Kupplungshacken ausgebildet sind, sodass sie flexibel mit an sich bekannten Koppelstellen von Arbeitsgeräten verbindbar sind. Eine technisch bewährte Lösung der Gestaltung der Koppelpunkte ergibt sich dann, wenn die arbeitsgeräteseitigen Anlenkpunkt der oberen und unteren Koppelelemente und der Verbindungselemente als Kupplungshacken ausgebildet sind und die jeweils mit den korrespondierenden Anlenkpunkten des Arbeitsgerätes oder eines Koppelrahmens eine gelenkige Verbindung bilden

In einer vorteilhaften Weiterbildung der Erfindung sind die arbeitsfahrzeugseitigen Lagerstellen der paarweise angeordneten unteren und oberen Koppelelemente sowie der Verbindungselemente jeweils zueinander horizontal beabstandet angeordnet, sodass die Positionierung zumindest eines Zapfwellengetriebes und/oder einer Zugvorrichtung zwischen diesen ermöglicht wird.

Eine Reduzierung des an der Hubwelle angreifenden Drehmoments nimmt bei gleicher Lasteinleitung mit geringer werdendem Abstand zwischen den fahrzeugseitigen Anlenkpunkten der unteren Koppelelemente der Koppelstruktur ab. Es ist deshalb von Vorteil, wenn zumindest der horizontale Abstand der arbeitsfahrzeugseitigen Lagerstellen der unteren Koppelelemente einstellbar ist.

In einer weiteren vorteilhaften Ausgestaltung der Erfindung umfassen die arbeitsfahrzeugseitigen und die arbeitsgeräteseitigen Koppelstellen der Koppelelemente und der Verbindungselemente Lagerstellen mit zwei oder drei Freiheitsgraden. In einer bevorzugten Ausgestaltung können diese als Kugelgelenke ausgebildet sein.

Je nach Anwendungsfall kann die Anbauvorrichtung in einer vorteilhaften Weiterbildung der Erfindung dem Arbeitsfahrzeug frontseitig und/oder heckseitig zugeordnet sein.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine perspektivische Darstellung einer beispielhaften Struktur der erfindungsgemäßen Anbauvorrichtung
- Figur 2: ein kinematisches Schema der Anbauvorrichtung nach Fig. 1.

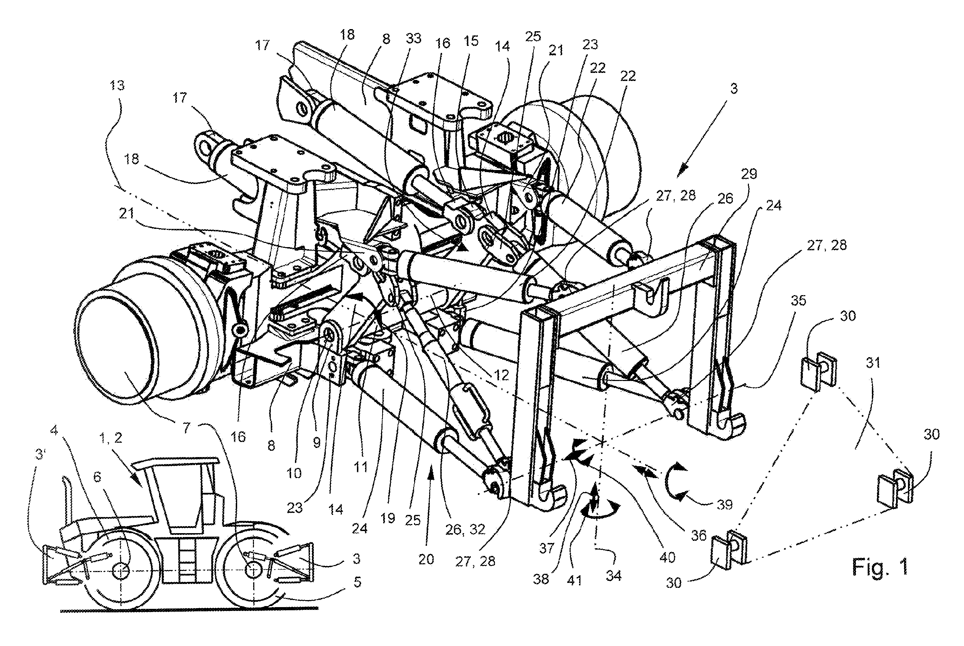

Fig. 1 zeigt ein als Schlepper 2 ausgeführtes Arbeitsfahrzeug 1 dem heckseitig die noch näher zu beschreibende Anbauvorrichtung 3 zugeordnet ist. Es liegt im Rahmen der Erfindung, dass die Anbauvorrichtung 3, 3' dem Schlepper 2 alternativ oder zugleich auch frontseitig zugeordnet sein kann. In an sich bekannter Weise verfügt der Schlepper 2 über jeweils eine, Laufräder 4, 5 aufnehmende Vorderachse 6 und Hinterachse 7. Im dargestellten Ausführungsbeispiel wird die Hinterachse 7 von einer, dem als Schlepper 2 ausgeführten Arbeitsfahrzeug 1 zugeordneten Tragrahmenstruktur 8 aufgenommen. In einem der Hinterachse 7 untenseitig zugeordneten Bereich sind der Tragrahmenstruktur 8 Lagerflansche 9 angeformt, die die Lagersitze 10 einer Hubwelle 11 in der Weise aufnehmen, dass sich die Drehachse 12 der Hubwelle 11 nahezu senkrecht zur Fahrzeuglängsachse 13 des Schleppers 2 erstreckt. Im Bereich der Lagersitze 10 sind der Hubwelle 11 Hubarme 14 angeformt, denen in ihrem obenseitigen, der Hinterachse 7 zugeordneten Bereich Halteflansche 15 angeformt sind in welche schwenkbeweglich die kolbenstangenseitigen Enden 16 von zylinderseitig 17 ebenfalls schwenkbeweglich von der Tragrahmenstruktur 8 aufgenommenen Hubzylindern 18 eingreifen. Durch Druckbeaufschlagung oder Druckentlastung der Hubzylinder 18 werden die Hubarme 14 und damit die Hubwelle gemäß Pfeilrichtung 19 um die Drehachse 12 der Hubwelle 11 verschwenkt.

Zur Anlenkung der noch näher zu beschreibenden erfindungsgemäßen Koppelstruktur 20 sind der Tragrahmenstruktur 8 des Schleppers 2 in einem obenseitigen Bereich auf horizontal gleicher Höhe Halteflansche 21 zur schwenkbeweglichen Aufnahme der ersten, paarweise angeordneten oberen Koppelelemente 22 angeformt. In einem untenseitigen, vorzugsweise im Bereich der Lagerflansche 9 der Hubwelle 11 liegenden Bereich sind der Tragrahmenstruktur 8 des Schleppers 2 auf horizontal gleicher Höhe Halteflansche 23 zur schwenkbeweglichen Aufnahme der zweiten, paarweise angeordneten unteren Koppelelemente 24 angeformt. Zudem verfügen die Hubarme 14 der Hubwelle 11 in einem obenseitigen, der Hinterachse 7 abgewandten Bereich über weitere Halteflansche 25, die paarweise angeordnete Verbindungselemente 26 schwenkbeweglich aufnehmen. An ihren der Hinterachse 7 abgewandten freien Enden sind den oberen Koppelelemente 22, den unteren Koppelelementen 24 und den Verbindungselementen 26 noch näher zu beschreibende Anlenkpunkte 27 zugeordnet, die entweder schwenkbeweglich mit Koppelstellen 28 eines Koppelrahmens 29 oder unmittelbar mit Koppelstellen 30 eines an das Arbeitsfahrzeug 1 zu adaptierenden Arbeitsgerätes 31, wie etwa ein Pflug, verbindbar sind. Die Koppel- und Verbindungselemente (22, 24, 26) bilden zugleich in erfindungsgemäßer Weise die Koppelglieder (22, 24, 26) der Koppelstruktur (20).

Aus Vereinfachungsgründen werden weitere Aspekte der Erfindung an einer Ausführung mit Koppelrahmen 29 beschrieben, obgleich die dargelegten Zusammenhänge in analoger Weise auch für Anbauvorrichtungen 3 gelten, die ohne Verwendung eines Koppelrahmens 29 unmittelbar mit dem jeweiligen Arbeitsgerät 31 über Kopplungshacken verbunden sind. Fig. 1 zeigt die Ausführung der Koppelstruktur 20, bei der die Anbauvorrichtung 3 in sechs Freiheitsgraden betrieben werden kann. Hierfür ist es erforderlich, dass sowohl die oberen als auch die unteren Koppelsegmente 22, 24 sowie eines der die Hubwelle 11 mit dem Koppelrahmen 29 verbindenden Verbindungselemente 26 längenveränderlich, im einfachsten Fall als Hydraulikzylinder, ausgebildet sind. Das weitere der paarweise angeordneten Verbindungselemente 26 ist als starre Verbindungsstrebe 32 ausgebildet. Entweder durch separate oder aufeinander abgestimmte Druckbeaufschlagung und Druckentlastung der die Hubwelleneinheit 33 betätigenden Hubzylinder 18 oder der längenveränderlichen oberen und unteren Koppelelemente 22, 24 sowie der einen längenveränderlichen Verbindungsstrebe 26 kann der Koppelrahmen 29 und folglich das an ihn adaptierte Arbeitsgerät 31 Translationsbewegungen (Pfeilrichtungen 36-38) entlang sowie Rotationsbewegungen (Pfeilrichtungen 39-41) um eine in Fahrzeuglängsrichtung 13, quer zur Fahrzeuglängsrichtung 35 sowie in vertikaler Richtung 34 orientierte Bewegungsachse ausführen. Neben der völlig freien Bewegung des Koppelrahmens 29 im Raum kann beispielsweise die Translationsbewegung 36 des Koppelrahmens 29 entlag der Fahrzeuglängsachse 13 zur Schwingungskompensation zwischen adaptiertem Arbeitsgerät 31 und dem Arbeitsfahrzeug 1 genutzt werden. Eine solche Anwendung ist insbesondere dann hilfreich, wenn das adaptierte Arbeitsgerät 31 als nicht dargestellte und an sich bekannte Kolbenpresse ausgeführt ist, deren umlaufender, einen Arbeits- und einen Leerhub ausführender Presskolben bei herkömmlichen Anbauvorrichtungen 3 erhebliche Schwingungen in das Arbeitsfahrzeug 1 einleitet.

Indem eines der Verbindungselemente 26 als starre Verbindungsstrebe 32 ausgeführt ist und die Verbindungselemente 26 mechanisch mit der Hubwelleneinheit 33 gekoppelt sind, ist die Koppelstruktur 20 zugleich so beschaffen, dass die Anbauvorrichtung 3 in einer sogenannten passiven Schwimmstellung betrieben werden kann, in der ein an die Anbauvorrichtung 3 adaptiertes Arbeitsgerät 31 über den Boden gleiten kann, ohne dass die längenveränderlichen Koppel- und Verbindungselemente 22, 24 , 26 aktiv angesteuert werden müssen. Es liegt jedoch im Rahmen der Erfindung, dass die oberen und unteren Koppelelemente 22, 24 sowie die Verbindungselemente 26 wahlweise als starre Verbindungssterben 32 und/oder längenveränderliche Hubzylinder ausgeführt sein können, wobei sich dann je nach Art und Anzahl der starren und längenveränderlichen Elemente die Zahl der Freiheitsgrade, in der die Koppelstruktur 20 bewegt werden kann ändert. Für den Fall, dass alle oberen und unteren Koppelelemente 22, 24 und die Verbindungsstreben 26 als starre Verbindungssterben ausgeführt sind reduziert sich die Bewegung der Koppelstruktur 20 nahezu auf die vertikale Translationsbewegung 38, die dann durch Druckbeaufschlagung oder Druckentlastung der die Hubwelle verschwenkenden Hubzylinder 18 bewirkt wird.

In dem in Fig. 1 dargestellten Ausführungsbeispiel wird die Hubwelleneinheit 33 von einer im Bereich ihrer beiden Enden in Lagersitzen 10 in der Tragrahmenstruktur 8 des Arbeitsfahrzeugs 1 gelagerten Hubwelle 11 gebildet, der ebenfalls beidendig jeweils ein Hubarm 14 zugeordnet ist, der dann wie bereits beschrieben, gelenkig mit jeweils einem in der Tragrahmenstruktur 8 des Arbeitsfahrzeugs 1 schwenkbeweglich angeordneten Hubzylinder 18 gekoppelt ist. Es liegt im Rahmen der Erfindung, dass in Abhängigkeit von den abzustützenden Kräften die Hubwelleneinheit 33 nur über einen einzig Hubarm 14 oder eine Vielzahl von Hubarmen 14 mit jeweils einem diesen zugeordneten Hubzylinder 18 verfügt.

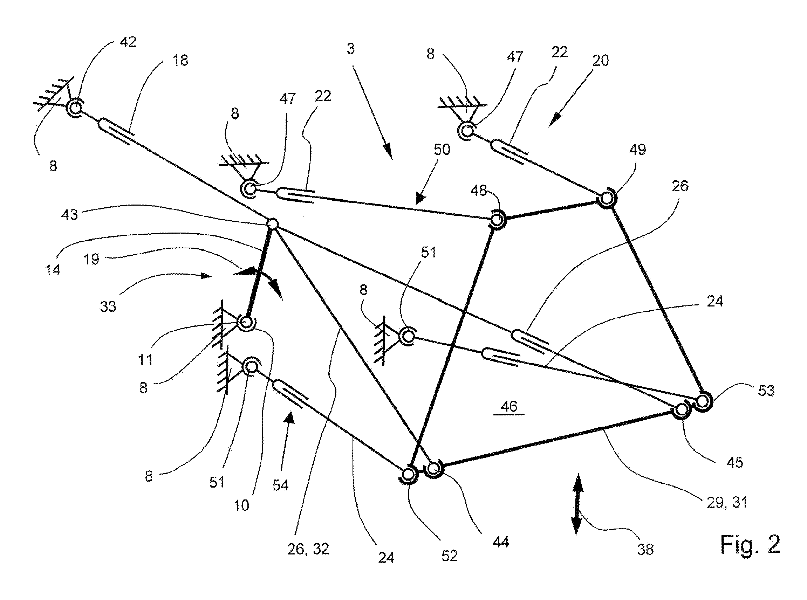

Fig. 2 zeigt nun das kinematische Schema der in Fig. 1 dargestellten Anbauvorrichtung 3 mit erfindungsgemäßer Koppelstruktur 20, wobei gleichwirkende Elemente eines kinematischen Mechanismus aus Vereinfachungsgründen in einem kinematischen Schema zu einem einzigen funktionsbestimmenden Elemente zusammengefasst werden. Beispielsweise ist der funktionsbestsmmende Hubzylinder 18 und seine noch zu beschreibenden Elemente Lagerstelle 42 und Gelenkpunkt 43 nur einmal in dem kinematischen Schema vorhanden, obgleich eine Vielzahl derartiger Hubzylinder 18 in der Anbauvorrichtung 3 vorgesehen sein können.

Der zumindest eine, die Hubwelleneinheit 33 gemäß Pfeilrichtung 19 bewegende Hubzylinder 18 ist einenends schwenkbeweglich mittels der Lagerstelle 42 in der Tragrahmenstruktur 8 des Arbeitsfahrzeugs 1 gelagert. Anderenends ist der Hubzylinder in einem Gelenkpunkt 43 schwenkbeweglich mit dem zumindest einem Hubarm 14 der Hubwelleneinheit 33 gekoppelt, wobei der Hubarm 14 selbst drehfest mit der Hubwelle 11 verbunden ist. Die Hubwelle 11 ist in Lagersitzen 10 schwenkbeweglich in der Tragrahmenstruktur 8 des Arbeitsfahrzeugs 1 abgestützt. Weiter nimmt der zwischen Hubarm 14 und Hubzylinder 18 ausgebildete Gelenkpunkt 43 auch jeweils ein freies Ende der Verbindungselemente 26 schwenkbeweglich auf, wobei in der dargestellten Ausführungsvariante eines der Verbindungselemente 26 als starre Verbindungsstrebe 32 ausgeführt ist. Das weitere frei Ende des jeweiligen Verbindungselementes 26 ist in einer Lagerstelle 44, 45 schwenkbeweglich an einem Koppelrahmen 29, der auch unmittelbar von dem zu adaptierenden Arbeitsgerät 31 gebildet werden kann, abgestützt. Indem nun der Hubzylinder 18 und die Hubwelle 11 miteinander in dem Gelenkpunkt 43 schwenkbeweglich verbunden und jeweils zugleich in der Tragrahmenstruktur 8 des Arbeitsfahrzeugs 1 abgestützt sind und die Verbindungselemente 26 vereinfacht einenends ebenfalls in diesem Gelenkpunkt 43 angreifen und anderenends über weitere Lagerstellen 44, 45 mit ein und demselben Koppelrahmen 29 oder ein und demselben Arbeitsgerät 31 gekoppelt sind, bilden der Tragrahmen 8, der Hubzylinder 18, die Hubwelle 11 mit zugehörigem Hubarm 14 und die mit dem Koppelrahmen 29 und/oder dem Arbeitsgerät 31 gekoppelten Verbindungselemente 26 eine teilweise geschlossene kinematische Kette 46, die im wesentlichen die vertikale Translationsbewegung 38 des Koppelrahmens 29 und des Arbeitsgerätes 31 bewirkt.

Weiter sind die oberen Koppelelemente 22 einenends über Lagerstellen 47 gelenkig mit dem Tragrahmen 8 des Arbeitsfahrzeugs 1 gekoppelt. Die weiteren freien Enden der oberen Koppelelemente 22 sind jeweils in einer Lagerstelle 48, 49 schwenkbeweglich an dem Koppelrahmen 29, der auch unmittelbar von dem zu adaptierenden Arbeitsgerät 31 gebildet werden kann, abgestützt. Damit bilden die einerseits gestellfest und andererseits mit dem Koppelrahmen 29 und/oder dem Arbeitsgerät 31 gekoppelten oberen Koppelelemente 22 erfindungsgemäß eine erste geschlossene kinematische Kette 50. In analoger Weise sind die unteren Koppelelemente 24 einenends über Lagerstellen 51 gelenkig mit dem Tragrahmen 8 des Arbeitsfahrzeugs 1 gekoppelt. Die weiteren freien Enden der unteren Koppelelemente 24 sind jeweils in einer Lagerstelle 52, 53 schwenkbeweglich an dem Koppelrahmen 29, der auch unmittelbar von dem zu adaptierenden Arbeitsgerät 31 gebildet werden kann, abgestützt. Damit bilden die einerseits gestellfest und andererseits mit dem Koppelrahmen 29 und/oder dem Arbeitsgerät 31 gekoppelten unteren Koppelelemente 24 erfindungsgemäß die weitere geschlossene kinematische Kette 54. Indem die oberen und unteren Koppelelemente 22, 24 und die Verbindungsstreben 26 jeweils paarweise und in dem rechts- und linksseitigen Randbereich der Koppelstruktur 20 angeordnet sind, ergeben sich die erfindungsgemäß geschlossenen kinematischen Ketten 50, 54 auch in der Weise, dass jeweils die rechts- und linksseitig angeordneten oberen und unteren, in der Tragrahmenstruktur 8 und dem Koppelrahmen 29 und/oder dem Arbeitsgerät 31 gelagerten Koppelelemente 22, 24 eine geschlossene kinematische Kette 50, 54 bilden. In analoger Weise ergeben sich die erfindungsgemäß geschlossenen Ketten 50, 54 zwischen den diagonal gegenüberliegenden oberen und unteren Koppelelementen 22, 24 der beiden Seiten der Koppelstruktur 20.

Weiter liegt es im Rahmen der Erfindung, dass die längenveränderlichen unteren und oberen Koppelelementen 22, 24 und das oder die längenveränderlichen Verbindungselemente 26 auf hydraulischem, mechanischem oder elektrischem Weg in ihrer Länge verstellbar sind. Unabhängig davon, ob die jeweiligen Koppel- und Verbindungselemente 22, 24, 26 längenveränderlich oder starr ausgeführt sind, ergibt sich eine lastoptimierte Ausführung der Anbauvorrichtung 3 dann, wenn die fahrzeugachsenseitigen Lagerstelle 51 der unteren Koppelelemente 24 nahe den von der Tragrahmenstruktur 8 aufgenommenen Lagersitzen 10 der Hubwelle 11 an der Tragrahmenstruktur 8 positioniert sind. Weiter liegt es im Rahmen der Erfindung, dass die Lagerstellen 44, 45, 48, 49, 52, 53 zwischen Koppelstruktur 20 sowie dem Koppelrahmen 29 und/oder dem Arbeitsgerät 31 Kupplungshacken umfassen, die den unteren und oberen Koppelelemente 22, 24 und den Verbindungselementen 26 zugeordnet sind.

Weiter können die arbeitsfahrzeugseitigen Lagerstellen 43, 47, 51 der paarweise angeordneten unteren und oberen Koppelelemente 22, 24 sowie der Verbindungselemente 26 jeweils zueinander einen horizontalen Abstand aufweisen, der die Positionierung zumindest eines nicht dargestellten Zapfwellengetriebes und/oder einer ebenfalls nicht dargestellten Zugvorrichtung zwischen diesen ermöglicht. Zudem kann zumindest der horizontale Abstand der Lagerstellen 51 der unteren Koppelelemente 24 einstellbar sein, sodass die auf die Anbauvorrichtung 3 wirkenden Lasten weiter optimiert werden können. Es liegt zudem im Rahmen der Erfindung, dass die verschiedenen Lagerstellen 44, 45, 47, 51-53 der Koppel- und Verbindungselemente 22, 24, 26 als Lagerstellen mit zwei oder drei Freiheitsgraden oder als Kugelgelenke ausgebildet sind.

**Bezugszeichenliste:**

| | | | |
|---|---|---|---|
| 1 | Arbeitsfahrzeug | 31 | Arbeitsgerät |
| 2 | Schlepper | 32 | Verbindungsstrebe |
| 3 | Anbauvorrichtung | 33 | Hubwelleneinheit |
| 4 | Laufrad | 34 | vertikale Schwenkachse |
| 5 | Laufrad | 35 | Querachse |
| 6 | Vorderachse | 36-38 | Translationsbewegung |
| 7 | Hinterachse | 39-41 | Rotationsbewegung |
| 8 | Tragrahmenstruktur | 42 | Lagerstelle |
| 9 | Lagerflansch | 43 | Gelenkpunkt |
| 10 | Lagersitz | 44 | Lagerstelle |
| 11 | Hubwelle | 45 | Lagerstelle |
| 12 | Schwenkachse | 46 | teilweise geschlossene |
| | | | kinematische Kette |
| 13 | Fahrzeuglängsachse | 47-49 | Lagerstelle |
| 14 | Hubarm | 50 | geschlossene kinematische Kette |
| 15 | Halteflansch | 51-53 | Lagerstelle |
| 16 | kolbenstangenseitiges Ende | 54 | geschlossene kinematische Kette |
| 17 | zylinderseitiges Ende | | |
| 18 | Hubzylinder | | |
| 19 | Pfeilrichtung | | |
| 20 | Koppelstruktur | | |
| 21 | Halteflansch | | |
| 22 | oberes Koppelelement | | |
| 23 | Halteflansch | | |
| 24 | Unteres Koppelelement | | |
| 25 | Halteflansch | | |
| 26 | Verbindungselement | | |
| 27 | Anlenkpunkt | | |
| 28 | Koppelstelle | | |
| 29 | Koppelrahmen | | |
| 30 | Koppelstelle | | |

## Patentansprüche

1. Anbauvorrichtung für ein Arbeitsfahrzeug zur Koppelung eines Arbeitsgerätes an das Arbeitsfahrzeug eine in der Tragrahmenstruktur des Arbeitsfahrzeugs gelagerte Hubwelleneinheit und eine mit dieser in Wirkverbindung stehende Koppelstruktur umfassend, wobei die Hubwelleneinheit eine Hubwelle, zumindest einen mit der Hubwelle fest verbundenen Hubarm und wenigstens einen mit dem Hubarm gelenkig verbundenen Hubzylinder umfasst,
**dadurch gekennzeichnet,**
**dass** die Koppelstruktur (20) eine Vielzahl von Koppelgliedern (22, 24, 26) umfasst und die Koppelglieder (22, 24, 26) der Koppelstruktur (20) und die Hubwelleneinheit (33) geschlossene kinematische Ketten (50, 54) und zumindest eine teilweise geschlossene kinematische Kette (46) ausbilden.

2. Anbauvorrichtung für ein Arbeitsfahrzeug nach Anspruch 1,
**dadurch gekennzeichnet,**
**dass** die Koppelstruktur (20) erste gelenkig an der Tragrahmenstruktur (8) angeordnete obere Koppelelemente (22), zweite gelenkig an der Tragrahmenstruktur (8) angelenkte untere Koppelelemente (24) und gelenkig an Hubarmen (14) der Hubwelle (11) angeordnete Verbindungselemente (26) umfasst und wobei die dem Arbeitsfahrzeug (1) abgewandten freien Enden der Koppel- und Verbindungselemente (22, 24, 26) unmittelbar an dem jeweiligen Arbeitsgerät (31) oder an einem Koppelrahmen (29) adaptiert sind.

3. Anbauvorrichtung für ein Arbeitsfahrzeug nach Anspruch 1,
**dadurch gekennzeichnet,**
**dass** die Hubwelleneinheit (33) zumindest eine in der Tragrahmenstruktur (8) des Arbeitsfahrzeugs (1) gelagerte Hubwelle (11), zumindest einen mit der Hubwelle (11) fest verbundenen Hubarm (14) und einen mit dem Hubarm (14) gelenkig verbundenen, in der Tragrahmenstruktur (8) des Arbeitsfahrzeugs (1) gelagerten Hubzylinder (18) umfasst.

4. Anbauvorrichtung für ein Arbeitsfahrzeug nach einem der Ansprüche 1-3,
**dadurch gekennzeichnet,**
**dass** eine erste geschlossenen kinematischen Kette (50) von den mit einem Koppelrahmen (29) oder dem Arbeitsgerät (31) verbundenen oberen Koppelelemente (22) und die zweite geschlossenen kinematische Kette (54) von den ebenfalls mit dem Koppelrahmen (29) und/oder dem Arbeitsgerät (31) verbundenen unteren Koppelelementen (24) gebildet werden.

5. Anbauvorrichtung für ein Arbeitsfahrzeug nach einem der Ansprüche 1-3,
**dadurch gekennzeichnet,**
**dass** die erste und zweite geschlossene kinematische Kette (50, 54) jeweils von den mit einem Koppelrahmen (29) und/oder dem Arbeitsgerät (31) verbundenen oberen und unteren Koppelelementen (22, 24) einer Seite der Koppeistruktur (20) gebildet werden.

6. Anbauvorrichtung für ein Arbeitsfahrzeug nach einem der Ansprüche 1-3,
**dadurch gekennzeichnet,**
**dass** die erste und zweite geschlossene kinematische Kette (50, 54) jeweils von den mit einem Koppelrahmen (29) und/oder dem Arbeitsgerät (31) verbundenen oberen und unteren Koppelelementen (22, 24) der gegenüberliegenden Seiten der Koppelstruktur (20) gebildet werden.

7. Anbauvorrichtung für ein Arbeitsfahrzeug nach einem der Ansprüche 1-3,
**dadurch gekennzeichnet,**
**dass** die zumindest eine teilweise geschlossene kinematische Kette (46) von der Hubwelleneinheit (33) und den mit der Hubwelleneinheit (33) und einem Koppelrahmen (29) und/oder dem Arbeitsgerät (31) gelenkig gekoppelten Verbindungselementen (26) gebildet wird.

8. Anbauvorrichtung für ein Arbeitsfahrzeug nach Anspruch 7,
**dadurch gekennzeichnet,**
**dass** der Hubwelle (11) der Hubwelleneinheit (33) zumindest zwei Hubarme (14) zugeordnet sind und jeder Hubarm (14) schwenkbeweglich mit einem gelenkig in der Tragrahmenstruktur (8) des Arbeitsfahrzeugs (1) gelagerten Hubzylinder (18) gekoppelt ist.

9. Anbauvorrichtung für ein Arbeitsfahrzeug nach Anspruch 2,
**dadurch gekennzeichnet,**
**dass** wahlweise eines oder mehrere der Koppelelemente (22, 24) und Verbindungselemente (26) starr und die übrigen Koppelelemente (22, 24) und Verbindungselemente (26) längenveränderlich ausgebildet sind.

10. Anbauvorrichtung für ein Arbeitsfahrzeug nach Anspruch 9,
**dadurch gekennzeichnet,**
**dass** stets zumindest eines der Verbindungselemente (26) starr ausgebildet ist.

11. Anbauvorrichtung für ein Arbeitsfahrzeug nach einem oder mehreren der vorhergehenden Ansprüche,
**dadurch gekennzeichnet,**
**dass** die Koppel- und Verbindungselemente (22, 24, 26) paarweise angeordnet und jeweils rechtseitig oder linksseitig der Anbauvorrichtung (3) zugeordnet sind.

12. Anbauvorrichtung für ein Arbeitsfahrzeug nach einem oder mehreren der vorhergehenden Ansprüche,
**dadurch gekennzeichnet,**
**dass** die Längenänderung der längenveränderlichen Koppel- und Verbindungselemente (22, 24, 26) hydraulisch, mechanisch und/oder elektrisch erfolgt.

13. Anbauvorrichtung für ein Arbeitsfahrzeug nach einem oder mehreren der vorhergehenden Ansprüche,
**dadurch gekennzeichnet,**
**dass** die Lagerstellen (10) der Hubwelle (11) an der Tragrahmenstruktur (8) des Arbeitsfahrzeugs (1) und die Lagerstellen (51) der unteren Koppelelemente (24) an der Tragrahmenstruktur (8) des Arbeitsfahrzeugs (1) nahe zueinander angeordnet sind.

14. Anbauvorrichtung für ein Arbeitsfahrzeug nach einem oder mehreren der vorhergehenden Ansprüche,
**dadurch gekennzeichnet,**
**dass** die arbeitsgeräteseitigen Enden der oberen und unteren Koppelelemente (22, 24) und der Verbindungselemente (26) als Kupplungshacken ausgebildet sind.

15. Anbauvorrichtung für ein Arbeitsfahrzeug nach einem oder mehreren der vorhergehenden Ansprüche,
**dadurch gekennzeichnet,**
**dass** die arbeitsfahrzeugseitigen Lagerstellen (43, 47, 51) der paarweise angeordneten unteren und oberen Koppelelemente (22, 24) sowie der Verbindungselemente (26) jeweils zueinander einen horizontalen Abstand aufweisen.

16. Anbauvorrichtung für ein Arbeitsfahrzeug nach Anspruch 15,
**dadurch gekennzeichnet,**
**dass** zumindest der horizontale Abstand der arbeitsfahrzeugseitigen Lagerstellen (51) der unteren Koppelelemente (24) einstellbar ist.

17. Anbauvorrichtung für ein Arbeitsfahrzeug nach einem oder mehreren der vorhergehenden Ansprüche,
**dadurch gekennzeichnet,**
**dass** die arbeitsfahrzeugseitigen und die arbeitsgeräteseitigen Lagerstellen (44, 45, 47, 51-53) der Koppel- und Verbindungselemente (22, 24, 26) als Lagerstellen mit zwei oder drei Freiheitsgraden ausgebildet sind.

18. Anbauvorrichtung für ein Arbeitsfahrzeug nach einem der vorhergehenden Ansprüche,
**dadurch gekennzeichnet,**
**dass** die Anbauvorrichtung (3) dem Arbeitsfahrzeug (1) frontseitig und/oder heckseitig zugeordnet ist.
